# FASCICULE DE BREVET EUROPEEN

(11) **EP 4 079 033 B1**
(45) Date de publication et mention de la délivrance du brevet: **09.10.2024**
(21) Numéro de dépôt: 20845414.0
(22) Date de dépôt: 14.12.2020
(51) Int. Cl.: H04W 28/02, H04W 72/54, H04W 72/542

(54) **CHANGEMENT DE MODE LORS D'UNE COMMUNICATION ENTRE TERMINAUX**
WECHSEL EINES MODUS WÄHREND EINER KOMMUNIKATION ZWISCHEN ENDGERÄTEN
CHANGING A MODE DURING A COMMUNICATION BETWEEN TERMINALS

(30) Priorité: 20.12.2019 FR 1915145
(43) Date de publication de la demande: 26.10.2022
(73) Titulaire: Orange, 92130 Issy-les-Moulineaux (FR)
(72) Inventeur: SCHWOERER, Jean, 92326 CHÂTILLON CEDEX (FR); VISOZ, Raphaël, 92326 CHÂTILLON CEDEX (FR)
(74) Mandataire: Plasseraud IP
(86) Numéro de dépôt international: PCT/FR2020/052423
(87) Numéro de publication internationale: WO 2021/123586

(56) Documents cités:
- US-A1- 2005 213 518
- ANONYMOUS: "Informationen zu "WLAN-Unterstützung" - Apple Support", 31 May 2018 (2018-05-31), pages 1 - 2, XP055726725, Retrieved from the Internet <URL:https://support.apple.com/de-de/HT205296> [retrieved on 20200901]
- ANONYMOUS: "FaceTime: Poor Connection Error on the iPhone or iPad, Fix - AppleToolBox", 2 April 2015 (2015-04-02), XP055726726, Retrieved from the Internet <URL:https://appletoolbox.com/facetime-poor-connection-error-on-the-iphone-or-ipad-fix/> [retrieved on 20200901]

## Description

La présente invention se rapporte à des procédés de gestion d'une communication entre terminaux dans un système de télécommunications, ainsi qu'à des dispositifs , ensemble de données , support de stockage et logiciel pour la mise en oeuvre de ces procédés.

Les réseaux mobiles à extension de couverture, tels que les réseaux de type LTE-M, permettent à des terminaux mobiles de continuer à participer à des communications de données ou de voix lorsqu'ils ne se trouvent plus sous la couverture radio nominale du réseau, en utilisant un mécanisme d'extension de couverture radio. Cette extension de couverture utilise généralement l'émission d'un certain nombre de répétitions, qui sont recombinées par le récepteur du terminal récepteur des données. Lorsque le besoin d'extension de couverture augmente, le nombre de répétitions augmente également.

Les répétitions qui interviennent dans la transmission des données depuis et/ou vers le terminal mobile peuvent augmenter la latence de transmission des données de bout en bout, c'est-à-dire entre le terminal mobile et le noeud du réseau (qui peut être un autre terminal) avec lequel des données sont échangées pour une communication en cours, et diminuer le débit disponible pour la communication. Dans le cas d'une communication de voix, une latence de bout en bout trop importante peut devenir une gêne pour les utilisateurs en communication, voire conduire à une interruption de la communication lorsque la latence dépasse un seuil prédéterminé. On peut ainsi observer une augmentation de la latence de bout en bout et une diminution du débit, toutes deux consécutives à une augmentation du niveau d'extension de couverture. Un état de la technique est par exemple US 2005/213518 A1 (AHYA DEEPAK P [US] ET AL) 29 septembre 2005.

Un objet de la présente invention est de remédier au moins partiellement aux inconvénients précités. L'invention est définie dans les revendications indépendantes. Des caractéristiques supplémentaires de l'invention sont fournies dans les revendications dépendantes.

Selon un premier aspect, il est proposé un procédé de gestion d'une communication entre terminaux dans un système de télécommunications. Le procédé proposé comprend, la communication étant établie selon un premier mode de communication : obtenir, par un premier terminal participant à la communication, une requête de changement de mode de communication pour passer du premier mode de communication à un deuxième mode de communication ; effectuer un basculement de la communication du premier mode de communication au deuxième mode de communication ; dans lequel le premier mode de communication et le deuxième mode de communication sont des modes de communication différents dans un ensemble comprenant un mode de communication vocal et un mode de communication textuel, le mode de communication vocal étant unidirectionnel ou bidirectionnel.

Dans un ou plusieurs modes de réalisation, le système de télécommunications peut comprendre une infrastructure de réseau d'accès radio, et le premier terminal peut être un terminal radio et la communication utiliser un lien de communication radio entre le premier terminal et l'infrastructure de réseau d'accès radio du système de télécommunications.

Dans un ou plusieurs modes de réalisation, l'infrastructure de réseau d'accès radio peut être une infrastructure de réseau avec extension de couverture radio, et le premier terminal peut être situé dans une zone d'extension de couverture radio de l'infrastructure de réseau d'accès radio du système de télécommunications.

Dans un ou plusieurs modes de réalisation, l'obtention de la requête peut comprendre, au premier terminal : recevoir la requête de changement de mode de communication depuis une infrastructure de réseau d'accès du système de télécommunications.

Dans un ou plusieurs modes de réalisation, l'obtention de la requête peut comprendre, au premier terminal : recevoir la requête de changement de mode de communication depuis un deuxième terminal participant à la communication.

Dans un ou plusieurs modes de réalisation, l'obtention de la requête peut comprendre, au premier terminal : générer la requête de changement de mode de communication pour passer du premier mode de communication au deuxième mode de communication.

Dans un ou plusieurs modes de réalisation, le procédé proposé peut comprendre en outre, au premier terminal : émettre, à destination d'un deuxième terminal participant à la communication, une requête de changement de mode de communication pour passer du premier mode de communication au deuxième mode de communication.

Dans un ou plusieurs modes de réalisation, la communication entre le premier terminal et un deuxième terminal peut utiliser un lien de communication, et le procédé proposé peut comprendre en outre, au premier terminal : obtenir des mesures de qualité du lien de communication et générer la requête de changement de mode de communication sur la base des mesures de qualité du lien de communication.

Dans un ou plusieurs modes de réalisation, obtenir des mesures de qualité du lien de communication peut comprendre : recevoir les mesures ou générer les mesures.

Dans un ou plusieurs modes de réalisation, les mesures de qualité du lien de communication peuvent être relatives à un critère de qualité du lien de communication, le critère de qualité comprenant un critère de latence de bout en bout de la communication, un critère de débit du lien de communication, et/ou un critère utilisant un paramètre de communication radio.

Dans un ou plusieurs modes de réalisation, le critère utilisant un paramètre de communication radio peut être relatif à une puissance de signal radio reçue par le premier terminal, et/ou à un nombre de répétitions dans la transmission de signal radio.

Dans un ou plusieurs modes de réalisation, le procédé proposé peut comprendre en outre : générer sur une interface homme-machine du premier terminal un message de signalisation du changement de mode de communication pour passer du premier mode de communication à un deuxième mode de communication.

Dans un ou plusieurs modes de réalisation, le procédé proposé peut comprendre en outre : recevoir une entrée utilisateur relative au changement de mode de communication pour passer du premier mode de communication à un deuxième mode de communication.

Dans un ou plusieurs modes de réalisation, le procédé proposé peut comprendre en outre : sur basculement de la communication vers le mode de communication textuel depuis un mode de communication vocal, afficher sur une interface graphique du premier terminal un contenu textuel sur la base d'une transcription d'un contenu vocal de la communication en mode audio avant basculement vers le mode de communication textuel.

Selon un deuxième aspect, il est proposé un procédé de gestion d'une communication entre terminaux dans un système de télécommunications comprenant une infrastructure de réseau, le procédé comprenant, à un noeud de l'infrastructure de réseau d'accès, la communication étant en cours selon un premier mode de communication : déterminer une variation de la qualité d'un lien de communication utilisé par un premier terminal participant à la communication et connecté à l'infrastructure de réseau, sur la base de la détermination de variation de qualité du lien de communication, transmettre au premier terminal une requête de changement de mode de communication pour passer du premier mode de communication à un deuxième mode de communication, dans lequel le premier mode de communication et le deuxième mode de communication sont des modes de communication différents dans un ensemble comprenant un mode de communication vocal et un mode de communication textuel, le mode de communication vocal étant unidirectionnel ou bidirectionnel.

Selon un autre aspect, un équipement terminal comprenant un processeur et une interface de communication couplée de manière opérationnelle au processeur, configuré pour la mise en oeuvre d'un procédé proposé dans la présente description, est proposé.

Selon un autre aspect, un noeud de réseau de communication de données comprenant un processeur et une interface de communication couplée de manière opérationnelle au processeur, le noeud de réseau étant configuré pour la mise en oeuvre d'un procédé proposé dans la présente description, est proposé.

Un autre aspect concerne un programme d'ordinateur, chargeable dans une mémoire associée à un processeur, et comprenant des portions de code pour la mise en oeuvre d'un procédé tel que proposé dans la présente description lors de l'exécution dudit programme par le processeur.

Un autre aspect concerne un ensemble de données représentant, par exemple par voie de compression ou d'encodage, un programme d'ordinateur tel que proposé dans la présente description.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant un processeur couplé de manière opérationnelle à une mémoire et à une interface entrées/sorties de communication de données, conduire l'ordinateur à mettre en oeuvre le procédé proposé selon l'un des modes de réalisation proposés dans la présente description.

### Brève description des dessins

D'autres particularités et avantages de la présente invention apparaîtront dans la description ci-après d'exemples de réalisation non limitatifs, en référence aux dessins annexés, dans lesquels :
**Fig. 1**

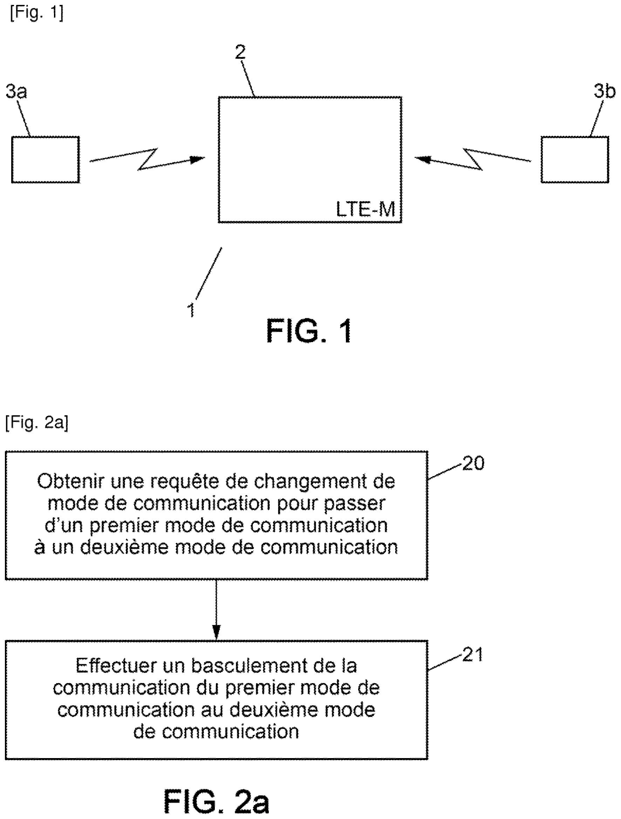

   [Fig. 1] est un schéma illustrant un exemple de système de télécommunications pour la mise en oeuvre d'un ou plusieurs modes de réalisation du procédé proposé ;
**Fig. 2a**
   [Fig. 2a] est un schéma illustrant un procédé proposé selon un ou plusieurs modes de réalisation ;
**Fig. 2b**

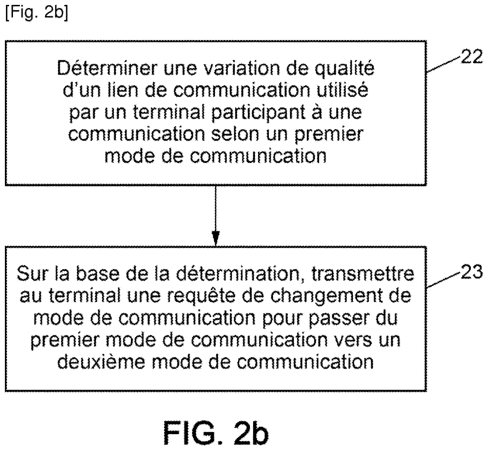

   [Fig. 2b] est un schéma illustrant un procédé proposé selon un ou plusieurs modes de réalisation ;
**Fig. 3**

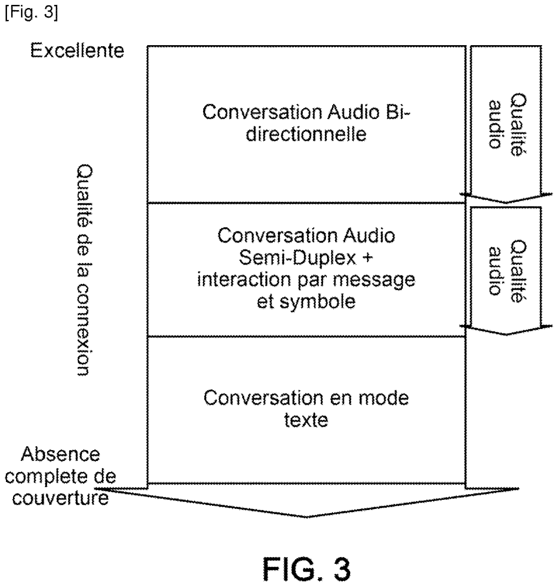

   [Fig. 3] est un schéma illustrant un ensemble de modes de communication selon un ou plusieurs modes de réalisation ;
**Fig. 4a**

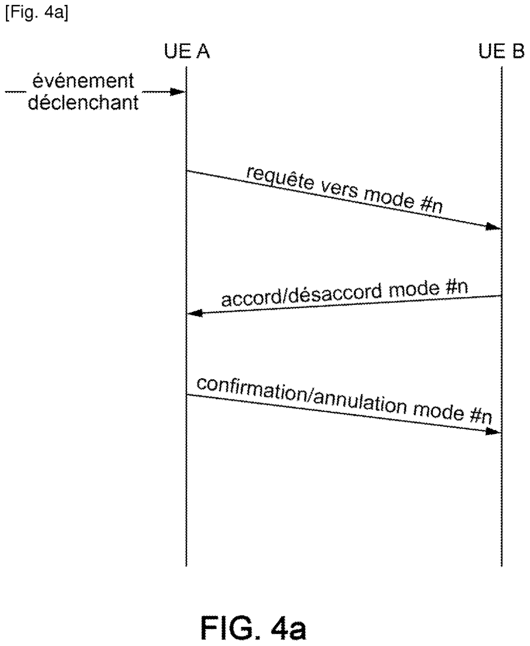

   [Fig. 4a] est un diagramme illustrant des échanges de message entre deux terminaux selon un ou plusieurs modes de réalisation ;
**Fig. 4b**

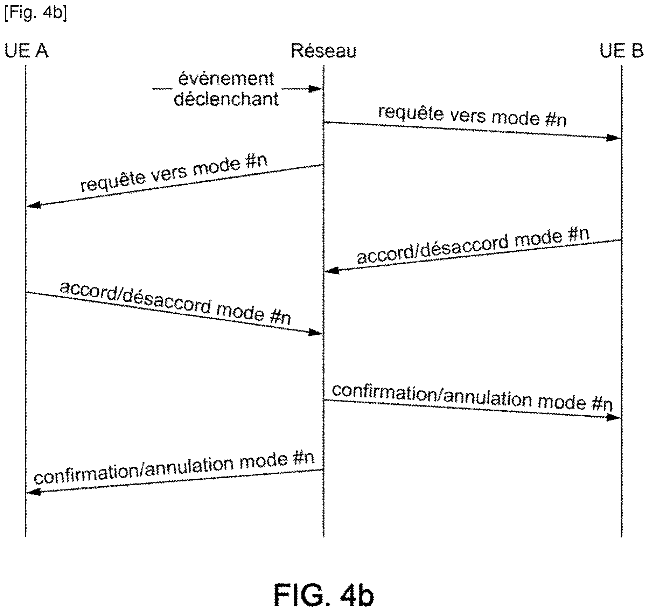

   [Fig. 4b] est un diagramme illustrant des échanges de message entre deux terminaux par l'intermédiaire d'une infrastructure de réseau selon un ou plusieurs modes de réalisation ;
**Fig. 5a**

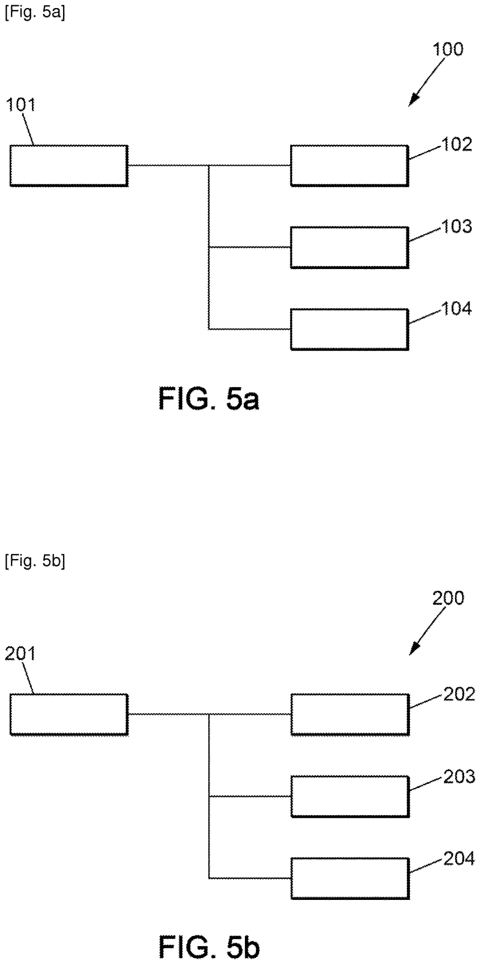

   [Fig. 5a] illustre un exemple d'architecture d'un terminal pour la mise en oeuvre du procédé proposé selon un ou plusieurs modes de réalisation ;
**Fig. 5b**
   [Fig. 5b] illustre un exemple d'architecture d'un noeud de réseau de communications pour la mise en oeuvre du procédé proposé selon un ou plusieurs modes de réalisation ;

### Description des modes de réalisation

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la présente description.

La présente description fait référence à des fonctions, moteurs, unités, modules, plateformes, et illustrations de diagrammes des méthodes et dispositifs selon un ou plusieurs modes de réalisation. Chacun des fonctions, moteurs, modules, plateformes, unités et diagrammes décrits peut être mis en oeuvre sous forme matérielle, logicielle (y compris sous forme de logiciel embarqué («firmware»), ou de «middleware»), microcode, ou toute combinaison de ces derniers. Dans le cas d'une mise en oeuvre sous forme logicielle, les fonctions, moteurs, unités, modules et/ou illustrations de diagrammes peuvent être mis en oeuvre par des instructions de programme d'ordinateur ou du code logiciel, qui peut être stocké ou transmis sur un support lisible par ordinateur, incluant un support non transitoire, ou un support chargé en mémoire d'un ordinateur générique, spécifique, ou de tout autre appareil ou dispositif programmable de traitement de données pour produire une machine, de telle sorte que les instructions de programme d'ordinateur ou le code logiciel exécuté(es) sur l'ordinateur ou l'appareil ou dispositif programmable de traitement de données, constituent des moyens de mise en oeuvre de ces fonctions.

Les modes de réalisation d'un support lisible par ordinateur incluent, de manière non exhaustive, des supports de stockage informatique et des supports de communication, y compris tout support facilitant le transfert d'un programme d'ordinateur d'un endroit vers un autre. Par «support(s) de stockage informatique», on entend tout support physique pouvant être accédé par ordinateur. Les exemples de support de stockage informatique incluent, de manière non limitative, les disques ou composants de mémoire flash ou tous autres dispositifs à mémoire flash (par exemple des clés USB, des clés de mémoire, des sticks mémoire, des disques-clés), des CD-ROM ou autres dispositifs de stockage optique de données, des DVD, des dispositifs de stockage de données à disque magnétique ou autres dispositifs de stockage magnétique de données, des composants de mémoire de données, des mémoires RAM, ROM, EEPROM, des cartes mémoires («smart cards»), des mémoires de type SSD («Solid State Drive»), et toute autre forme de support utilisable pour transporter ou stocker ou mémoriser des données ou structures de données qui peuvent être lues par un processeur d'ordinateur.

En outre, diverses formes de support lisible par ordinateur peuvent transmettre ou porter des instructions vers un ordinateur, telles qu'un routeur, une passerelle, un serveur, ou tout équipement de transmission de données, qu'il s'agisse de transmission filaire (par câble coaxial, fibre optique, fils téléphoniques, câble DSL, ou câble Ethernet), sans-fil (par infrarouge, radio, cellulaire, microondes), ou des équipements de transmission virtualisés (routeur virtuel, passerelle virtuelle, extrémité de tunnel virtuel, pare-feu virtuel). Les instructions peuvent, selon les modes de réalisation, comprendre du code de tout langage de programmation informatique ou élément de programme informatique, tel que, sans limitation, les langages assembleur, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, et bash scripting.

De plus, les termes «notamment», «par exemple», «exemple», «typiquement» sont utilisés dans la présente description pour désigner des exemples ou illustrations de modes de réalisation non limitatifs, qui ne correspondent pas nécessairement à des modes de réalisation préférés ou avantageux par rapport à d'autres aspects ou modes de réalisation possibles.

Les termes «réseau» et «réseau de communication» tels qu'utilisés dans la présente description font référence à une ou plusieurs liaisons de données qui peuvent coupler ou connecter des équipements, éventuellement virtualisés, de manière à permettre le transport de données électroniques entre des systèmes informatiques et/ou des modules et/ou d'autres dispositifs ou équipements électroniques, tel qu'entre un serveur et un dispositif client ou d'autres types de dispositifs, y compris entre dispositifs sans fil couplés ou connectés par un réseau sans fil, par exemple. Un réseau peut aussi inclure une mémoire de masse pour stocker des données, tel qu'un NAS (en anglais «network attached storage», un SAN (en anglais «storage area network»), ou toute autre forme de support lisible par un ordinateur ou par une machine, par exemple. Un réseau peut comprendre, en tout ou partie, le réseau Internet, un ou plusieurs réseaux locaux (en anglais «local area networks», ou LANs), un ou plusieurs réseaux de type WAN (en anglais «wide area networks»), des connexions de type filaire, des connexions de type sans fil, de type cellulaire, ou toute combinaison de ces différents réseaux. De manière similaire, des sous-réseaux peuvent utiliser différentes architectures ou être conformes ou compatibles avec différents protocoles, et inter-opérer avec des réseaux de plus grande taille. Différents types d'équipements peuvent être utilisés pour rendre interopérables différentes architectures ou différents protocoles. Par exemple, un routeur peut être utilisé pour fournir une liaison de communication ou une liaison de données entre deux LANs qui seraient autrement séparés et indépendants.

Les termes «couplé de manière opérationnelle», «couplé», «monté», «connecté» et leurs variantes et formes diverses utilisés dans la présente description font référence à des couplages, connexions, montages, qui peuvent être directs ou indirects, et comprennent notamment des connexions entre équipements électroniques ou entre des portions de tels équipements qui permettent des opérations et fonctionnements tels que décrits dans la présente description. De plus, les termes «connectés» et «couplés» ne sont pas limités à des connections ou des couplages physiques ou mécaniques. Par exemple, un couplage de manière opérationnelle peut inclure une ou plusieurs connexion(s) filaire(s) et/ou une ou plusieurs connexion(s) sans-fil entre deux équipements ou plus qui permettent des liaisons de communication simplex et/ou duplex entre les équipements ou des portions des équipements. Selon un autre exemple, un couplage opérationnel ou une connexion peut inclure un couplage par liaison filaire et/ou sans-fil pour permettre des communications de données entre un serveur du système proposé et un autre équipement du système.

Les termes «application» ou «programme applicatif» (AP) et leurs variantes («app», «webapp», etc.) tels qu'utilisés dans la présente description correspondent à tout outil qui fonctionne et est opéré au moyen d'un ordinateur, pour fournir ou exécuter une ou plusieurs fonction(s) ou tâche(s) pour un utilisateur ou un autre programme applicatif. Pour interagir avec un programme applicatif, et le contrôler, une interface utilisateur peut être fournie sur l'équipement sur lequel le programme applicatif est mis en oeuvre. Par exemple, une interface graphique (en anglais, «graphical user interface» ou GUI) peut être générée et affichée sur un écran de l'équipement utilisateur, ou une interface utilisateur audio peut être restituée à l'utilisateur en utilisant un haut-parleur, un casque ou une sortie audio.

Par « mode de communication vocal », on entend dans la présente description tout mode de communication de type conversationnel utilisant la voix. Une communication en mode de communication vocal bidirectionnel correspond à une communication en mode de communication vocal dans laquelle des signaux de voix (typiquement des signaux de parole) peuvent être échangés entre deux terminaux simultanément dans les deux sens. Une communication en mode de communication vocal unidirectionnel correspond à une communication en mode de communication vocal dans laquelle des signaux de voix (typiquement des signaux de parole) ne peuvent être échangés entre deux terminaux simultanément dans les deux sens, mais à un instant donné uniquement dans un sens. Les conversations de type « Push-To-Talk » (PTT), typiquement utilisées dans les réseaux radio-mobiles professionnels (en anglais PMR, pour « Professional Mobile Radio »), sont des exemples de communications en mode de communication vocal unidirectionnel. Par « mode de communication textuel », on entend dans la présente description tout mode de communication de type conversationnel utilisant des messages à contenu textuel. Les échanges de messages texte, de type SMS ou de tout autre type de messagerie à texte (tels que des messages texte échangés par le biais d'une application de communication vocale ou texte) sont des exemples de communication en mode de communication textuel. L'homme du métier comprendra que le procédé proposé n'est pas limité à un type particulier de communication en mode de communication vocal ou en mode de communication textuel, et qu'il pourra avantageusement être mis en oeuvre avec tous types de communication vocale et tous types de communication texte. En outre, la mise en oeuvre du procédé proposé pourra utiliser, selon le mode de réalisation, toute technologie de communication voix et toute technologie de communication texte.

Depuis l'apparition des communications radio, la téléphonie, c'est-à-dire la capacité à conduire une conversation "naturelle" à distance a longtemps été le but central des services de communications publics.

Cependant, permettre le bon déroulement d'une communication téléphonique à la manière d'une conversation naturelle implique que le moyen de communication puisse garantir certaines capacités, à défaut desquelles la conversation ne sera plus naturelle, voir même impossible. Parmi ces impératifs à garantir on trouve notamment : (1) la bidirectionnalité : il doit être possible d'entendre ce qui dit son interlocuteur à tout moment, y compris lorsque l'on est soit même en train de parler. On parle alors de communication "full duplex". Lorsque cette capacité n'est pas assurée et que chacun des locuteurs doit alors parler à tour de rôle, on parlera de semi duplex ; (2) L'instantanéité : afin de permettre l'interaction entre les deux locuteurs, et notamment un usage et une compréhension naturelle des réactions de l'un vis-à-vis de ce que dit l'autre, il faut que la latence, c'est-à-dire le temps écoulé entre l'émission d'un signal par l'un des locuteurs et sa perception par l'autre, soit suffisamment réduit. Il est courant de considérer qu'au-delà de 100 ms de latence, une gêne est constatée et qu'au-delà de 400 ms une conversation naturelle n'est plus possible ; (3) Une capacité suffisante à la transmission d'un signal audio de qualité. Depuis l'abandon des communications analogiques, la voix est numérisée et transportée sous ce format, avec un débit suffisant pour garantir, au-delà de l'intelligibilité, le confort acoustique de l'auditeur. Ce signal audio numérique peut être transporté tel quel, ou bien, si le débit disponible est insuffisant, être compressé au moyen d'un codec. Différents codées permettent d'atteindre des taux de compression plus moins important, mais il convient de noter que plus la compression est forte, plus le signal résultant sera adapté à un canal à faible débit, mais plus sa qualité audio sera dégradée.

Pour rendre un service de télécommunication conversationnel, les réseaux téléphoniques publics ont été dimensionnés dans le but de satisfaire ces impératifs.

Toutefois, dans d'autres contextes, et notamment dans celui des réseaux bas débit conçus pour l'Internet des objets (en anglais, « Internet of Things », ou « IoT »), ces impératifs ne sont pas forcément disponibles, et d'autres formes de communications sont apparues. On notera particulièrement les conversations audio "semi duplex" ou "simplex", et les conversations textuelles.

Dans les conversations audio « semi duplex », les participants parlent chacun à leur tour. Les participants qui n'ont pas la parole doivent donc attendre que le locuteur actif ait libéré la parole avant de pouvoir la prendre à leur tour. C'est typiquement le cas d'une conversation menée à l'aide de talkie-walkies, que l'on appelle aussi PTT (de l'anglais « Push-To-Talk »). Dans un tel cas de figure, le besoin de capacité est divisé par deux, et l'impératif de latence disparait.

Dans les conversations textuelles, les participants s'échangent des messages écrits en mode interactif au lieu de s'échanger des messages par la parole. C'est typiquement le cas d'une conversation par SMS (de l'anglais « Short Message Service »). Pour ce type de conversation, la latence n'est plus critique, et le débit requis est également très faible.

L'ensemble des techniques est aujourd'hui bien maitrisé par l'homme de l'art et couramment utilisé de par le monde. Toutefois, leur mise en oeuvre reste segmentée en fonction du type de réseau utilisé. Ainsi une communication téléphonique full duplex sera maintenue par le réseau aussi longtemps que ce dernier est capable de remplir les impératifs permettant de la supporter. Si, dans le cas où l'un des terminaux de la communication utilise un lien radio, la communication ne peut pas être maintenue par le réseau du fait de l'évolution du lien radio, elle sera simplement interrompue sans autre forme d'adaptation.

Ce cas de figure relève essentiellement du fait que, par le passé, les infrastructures de télécommunications, et particulièrement les réseaux téléphoniques, étaient conçus et déployés autour d'un usage central. En conséquence, les besoins techniques de l'usage en question étaient pris en compte, et de ce fait étaient naturellement satisfaits dès lors que les terminaux se trouvent dans une zone (par exemple une zone radio) desservie par le réseau.

Cependant, l'émergence dans les dernières décennies de réseaux de données a permis de dé-corréler l'infrastructure de l'usage qui en est fait : lorsqu'un réseau de données est déployé, c'est une capacité de transport de données qui est mise à disposition, sans qu'il soit possible de dire avec certitude quel usage sera porté par cette capacité. Ainsi, un réseau IP (de l'anglais « Internet Protocol ») peut supporter du transfert de fichier, une diffusion audio, une conversation voix ou en visioconférence tout comme une simple conversation par message texte. La récente apparition dans les réseaux mobiles de modes communication adaptés aux contraintes de l'Internet des Objets, c'est-à-dire ne nécessitant qu'un débit relativement faible, et n'ayant que peu de contraintes de latence, mais en présentant une couverture radio nettement étendue par rapport à la couverture normale des réseaux mobiles, a encore étendu au-delà de la voix conversationnelle la gamme de l'offre de connectivité des réseaux mobiles. L'offre de connectivité minimale offerte par les réseaux a été en effet étendue au-delà du support du service voix conversationnel en reposant sur de la transmission de données bas débits avec des latences pouvant être importantes visant la communication entre machines (IoT).

Parallèlement, alors que les liaisons d'échanges de données ont longtemps été des infrastructures fixes (par exemple infrastructure de réseau câblé et/ou fibre optique) offrant une certaine constance dans leurs capacités, on observe un mouvement de fond qui consiste à recourir de plus en plus à des échanges de données par voie radio en situation de mobilité. Ainsi à ce jour les réseaux mobiles de 4eme génération ne fonctionnent plus que par échanges de paquets de données, même pour acheminer une conversation téléphonique. Cependant, si la caractéristique inhérente des réseaux radio est de permettre la mobilité des terminaux, la conséquence qui y est liée est la variabilité, parfois assez grande, de la capacité du lien entre l'élément d'infrastructure d'accès au réseau radio (par exemple une station de base) et les terminaux.

En d'autres termes, l'évolution de la qualité des liens radios en fonction du temps, de la charge du réseau et de la mobilité des terminaux peut faire en sorte que la capacité de la liaison entre deux terminaux ne soit pas en permanence apte à remplir les mêmes impératifs de qualité de lien. Des techniques ont par exemple été développées pour adapter dynamiquement le taux de compression audio en fonction de la qualité du lien. Mais une fois la limite maximale de ce taux de compression atteinte, la communication n'est plus possible. De telles variations de taux de compression peuvent typiquement conduire à une brusque interruption de la communication téléphonique, par exemple lorsqu'un terminal radio de la communication s'éloigne trop de sa station de base de desserte. Dans une telle situation, si toutefois la qualité restante de la liaison le permet, c'est aux utilisateurs de prendre l'initiative de basculer dans un autre mode de conversation plus adapté à la faiblesse de la liaison, par exemple décidant de poursuivre la conversation par message texte.

La figure 1 est un diagramme illustrant un ou plusieurs modes de réalisation dans lesquels un système (1) de télécommunications comprend une infrastructure (2) de réseau sans fil, par exemple une infrastructure de réseau d'objets connectés, par exemple selon la technologie LTE-M, et deux terminaux (3a et 3b) connectés à l'infrastructure de réseau (2) et en communication.

On envisage ainsi une communication établie entre plusieurs terminaux (dans l'exemple illustré sur la figure 1 entre les deux terminaux mobiles (3a, 3b)) dans un système de télécommunications (1), la communication étant établie selon un premier mode de communication.

Ce premier mode de communication peut, selon les cas, être un mode de communication vocale (de type conversationnel) bidirectionnelle, un mode de communication vocale unidirectionnel, ou un mode de communication textuel.

L'homme du métier comprendra que le procédé proposé n'est pas limité à une architecture particulière ou une technologie particulière pour le système de télécommunications (1), et que le procédé proposé peut être mis en oeuvre dans tout système de télécommunications dans lequel une pluralité de terminaux peuvent être en communication selon un mode de communication dans un ensemble comprenant un mode de communication vocal bidirectionnel, un mode de communication vocal unidirectionnel, et un mode de communication textuel.

On décrit ci-après un procédé de gestion d'une communication entre terminaux dans un système de télécommunications tel que celui illustré sur la figure 1, dans un ou plusieurs modes de réalisation.

En référence aux figures 1 et 2a, dans un ou plusieurs modes de réalisation, l'un des terminaux (3a) participant à la communication peut obtenir (20) une requête de changement de mode de communication pour passer d'un premier mode de communication à un deuxième mode de communication, le premier mode de communication et le deuxième mode de communication étant des modes de communication différents dans un ensemble de modes de communication supportés par le système de télécommunications, par exemple comprenant un mode de communication vocale (de type conversationnel) bidirectionnelle, un mode de communication vocal unidirectionnel, et un mode de communication textuel.

Différents cas de figure peuvent être envisagés pour la requête, en fonction du premier mode de communication dans lequel se trouve la communication lors de l'obtention de la requête (mode de communication initial) : lorsque le mode de communication initial est le mode de communication vocal bidirectionnel, la requête de changement de mode peut être une requête pour passer de ce mode de communication initial vers un mode de communication vocal unidirectionnel, ou vers un mode de communication textuel. Lorsque le mode de communication initial est le mode de communication vocal unidirectionnel, la requête de changement de mode peut être une requête pour passer de ce mode de communication initial vers un mode de communication vocal bidirectionnel, ou vers un mode de communication textuel. Lorsque le mode de communication initial est le mode de communication textuel, la requête de changement de mode peut être une requête pour passer de ce mode de communication initial vers un mode de communication vocal unidirectionnel, ou vers un mode de communication vocal bidirectionnel.

Dans un ou plusieurs modes de réalisation, les différents modes de communication envisageables (car supportés par le système de télécommunications) peuvent être classés selon un ordre d'éligibilité, par exemple en fonction de leur exigence en termes de latence et de débit du service associé. Dans ces cas de figure, le système de télécommunications peut être configuré pour qu'un changement de mode à partir d'un premier mode de communication ne puisse être requis que vers un deuxième mode de communication déterminé en fonction du premier mode de communication. Par exemple, le système peut être configuré pour qu'une requête de changement de mode à partir du mode de communication vocal bidirectionnel ne puisse qu'être une requête pour passer de ce mode à un mode de communication vocal unidirectionnel (et non pas directement à un mode de communication textuel). A l'autre extrémité du classement des modes, le système peut aussi être configuré pour qu'une requête de changement de mode à partir du mode de communication textuel ne puisse qu'être une requête pour passer de ce mode à un mode de communication vocal unidirectionnel (et non pas directement à un mode de communication vocal bidirectionnel). Ainsi, dans les modes de réalisation utilisant un ensemble de modes de communication comprenant un mode de communication vocal bidirectionnel, un mode de communication vocal unidirectionnel, et un mode de communication textuel, chaque mode de l'ensemble peut être associé à un niveau d'éligibilité (par exemple le niveau 1 pour le mode de communication textuel, le niveau 2 pour le mode de communication vocal unidirectionnel, et le niveau 3 pour le mode de communication vocal bidirectionnel), et le système peut être configuré pour qu'un changement de mode réalise un passage d'un mode de communication initial d'un niveau d'éligibilité donné vers un autre mode dont le degré d'éligibilité est immédiatement supérieur ou inférieur à celui du mode de communication initial.

Le procédé proposé permet avantageusement de passer la communication en cours d'un premier mode de communication vers un deuxième mode de communication. En utilisant le procédé proposé, un fournisseur de services de télécommunications (tel qu'un opérateur) peut ainsi fournir un service de télécommunications conversationnel flexible dans sa forme, afin de s'adapter, sans interruption de service, aux évolutions de la qualité des liens dans une gamme beaucoup plus large que ce qui se pratique dans l'état de l'art.

En référence aux figures 1 et 2b, dans un ou plusieurs modes de réalisation, un noeud d'une infrastructure de réseau d'un système de télécommunications peut être configuré pour déterminer (22) une variation de la qualité d'un lien de communication utilisé par un premier terminal participant à une communication en cours selon un premier mode de communication et connecté à l'infrastructure de réseau d'accès. Le noeud d'infrastructure de réseau peut en outre être configuré pour, sur la base de la détermination de variation de qualité du lien de communication, transmettre (23) au premier terminal une requête de changement de mode de communication pour passer du premier mode de communication à un deuxième mode de communication, le premier mode de communication et le deuxième mode de communication étant des modes de communication différents dans un ensemble comprenant un mode de communication vocal bidirectionnel, un mode de communication vocal unidirectionnel, et un mode de communication textuel.

La figure 2b illustre ainsi des modes de réalisation dans lesquels l'infrastructure de réseau participe à la décision de changement de mode de communication pour passer d'un premier mode vers un deuxième mode, ce qui permet avantageusement d'alléger la mise en oeuvre du procédé proposé au sein des terminaux de communication.

La figure 3 illustre un ensemble de modes de communication selon un ou plusieurs modes de réalisation.

En référence à la figure 3, une communication en cours dans un premier mode de communication peut être modifiée pour être effectuée dans un second mode de communication, le premier mode et le second mode appartenant tous deux à un ensemble de modes comprenant un mode de communication en conversation audio bi-directionnelle, un mode de communication en conversation audio semi-duplex, ce mode pouvant éventuellement, dans un ou plusieurs modes de réalisation, prévoir en outre une interaction bidirectionnelle entre les deux terminaux de la communication par message et/ou par symboles, et un mode de communication en conversation en mode texte. Par exemple, un message pourrait indiquer au locuteur qui occupe le canal de transmission une demande de prise de parole, une opinion. Un symbole type smiley pourrait représenter un message selon une convention connue des interlocuteurs. Comme illustré sur la figure 3, dans un ou plusieurs modes de réalisation, chacun des modes de communication utilisables pour un changement de mode peut être hiérarchisé ou classé selon un ordre d'éligibilité ou de priorité. En référence à la figure 3 qui illustre un mode de réalisation dans lequel trois modes de communication sont éligibles, le mode de communication en conversation audio full-duplex peut se voir assigner un niveau de priorité élevé, parmi un niveau élevé, un niveau intermédiaire et un niveau bas, pour n'être utilisé que lorsque la qualité de la communication est à son niveau le plus élevé. Lorsque le niveau de la qualité de connexion et/ou de la qualité audio de la communication baisse, une transition vers le mode de communication en conversation audio semi-duplex peut être effectuée, afin de maintenir le service tout en s'adaptant à une qualité de connexion moins bonne et/ou à une qualité audio de la communication vocale moins bonne. De même, dans le cas où la communication est en mode de communication en conversation audio semi-duplex, lorsque le niveau de la qualité de connexion et/ou de la qualité audio de la communication baisse, une transition vers le mode de communication en mode textuel peut être effectuée, afin de maintenir le service tout en s'adaptant à une qualité de connexion moins bonne et/ou à une qualité audio de la communication vocale moins bonne. Ainsi, le mode de communication peut être adapté tout en maintenant le service, de manière transparente pour l'utilisateur, à mesure que la qualité audio de la communication vocale et/ou la qualité de la connexion se dégrade. A l'inverse, dans le cas où la communication est en mode de communication en mode texte, lorsque le niveau de la qualité de connexion augmente, une transition vers le mode de communication en conversation audio semi-duplex peut être effectuée, afin de maintenir le service tout en s'adaptant à une meilleure qualité de connexion. De manière similaire, dans le cas où la communication est en mode de communication en conversation audio semi-duplex, lorsque le niveau de la qualité de connexion et de la qualité audio de la communication augmente, une transition vers le mode de communication en conversation audio bi-directionnelle peut être effectuée, afin de maintenir le service tout en s'adaptant à de meilleures qualité de connexion et qualité audio de la communication vocale.

L'utilisation d'un ou plusieurs liens de communication radio est un exemple typique de situations dans lesquelles la qualité de connexion peut évoluer au cours d'une communication. Le procédé proposé peut donc avantageusement être mis en oeuvre dans un système de télécommunications qui comprend une infrastructure de réseau d'accès radio, pour la gestion d'une communication entre des terminaux parmi lesquels un premier terminal qui est un terminal radio qui utilise un lien de communication radio entre le premier terminal et l'infrastructure de réseau d'accès radio du système de télécommunications.

En particulier, le procédé proposé peut avantageusement être mis en oeuvre dans les cas où l'infrastructure de réseau d'accès radio est une infrastructure de réseau avec extension de couverture radio, par exemple reposant sur un procédé entrainant une baisse de débit et/ou une augmentation de la latence en fonction du niveau d'extension de couverture tel que, par exemple par la transmission de données avec un grand nombre de répétitions, et dans lesquels le premier terminal est situé dans une zone d'extension de couverture radio de l'infrastructure de réseau d'accès radio du système de télécommunications. Dans ces cas de figure, le premier terminal peut être en situation de subir une augmentation de la latence lorsque la qualité de sa couverture radio (et donc de son lien radio) avec l'infrastructure de réseau avec extension de couverture radio se dégrade, lorsque l'infrastructure de réseau sera configurée pour pallier cette dégradation en augmentant le nombre de répétitions pour la transmission de données depuis et/ou vers le premier terminal radio. La qualité de la communication peut faire l'objet d'une surveillance, par le terminal et/ou par le réseau, pour détecter des changements, et le cas échéant proposer de passer d'un mode de communication à un autre selon le procédé proposé. Par exemple, le procédé proposé peut avantageusement être mis en oeuvre dans un système de télécommunication comprenant un réseau de radiocommunications utilisant la technologie LTE-M.

Dans un ou plusieurs modes de réalisation, l'obtention d'une requête de changement de mode de communication par un premier terminal participant à la communication peut comprendre, au premier terminal, la réception de la requête.

Dans les modes de réalisation dans lesquels le système de télécommunications est configuré pour que la décision de changement de mode de communication soit prise au niveau d'une infrastructure de réseau d'accès du système de télécommunications à laquelle le premier terminal est connecté, la requête pourra être reçue au premier terminal en provenance de cette infrastructure de réseau d'accès. Le premier terminal pourra être configuré pour alors, sur réception de la requête de changement de mode de communication, éventuellement après avoir déterminé s'il supporte le changement de mode de communication demandé dans la requête, transmettre au terminal ou, selon le cas de figure, aux terminaux avec lesquels il est en communication, une requête de changement de mode de communication afin de mettre en oeuvre ce changement de mode de manière coordonnée aux extrémités de la communication. Ces modes de réalisation, qui font intervenir l'infrastructure de réseau de communication du système de télécommunications pour le changement de mode de communication d'une communication entre plusieurs terminaux, permettent avantageusement une mise en oeuvre peu complexe du changement de mode au niveau des terminaux, dans la mesure où ceux-ci ne font que mettre en oeuvre des décisions qui sont prises au niveau de l'infrastructure de réseau et qui leur sont communiqués par le biais de la requête de changement de mode.

Dans les modes de réalisation dans lesquels le système de télécommunications est configuré pour que la décision de changement de mode de communication soit prise au niveau d'un terminal engagé dans une communication, la requête pourra être reçue au premier terminal en provenance d'un autre terminal avec lequel il est en communication. Le premier terminal pourra être configuré pour alors, sur réception de la requête de changement de mode de communication, éventuellement après avoir déterminé s'il supporte le changement de mode de communication demandé dans la requête, mettre en oeuvre le changement de mode de communication, sans que l'infrastructure de réseau de communication à laquelle il est connecté participe à ce changement de mode. La coordination du changement de mode de communication entre les différents terminaux concernés peut utiliser tout type de mécanisme de coordination connu en soi, tel que, par exemple, un mécanisme dit de « double acquittement » (en anglais, « double handshake »). Ces modes de réalisation, qui ne font pas nécessairement intervenir l'infrastructure de réseau de communication du système de télécommunications pour le changement de mode de communication d'une communication entre plusieurs terminaux, ou dans lesquels l'intervention de l'infrastructure de réseau de communication du système de télécommunications pour le changement de mode de communication est limitée, permettent avantageusement une mise en oeuvre autonome du changement de mode de communication au niveau des terminaux.

Dans un ou plusieurs modes de réalisation, l'obtention d'une requête de changement de mode de communication par un premier terminal participant à la communication peut comprendre, au premier terminal, la génération de la requête de changement de mode de communication pour passer d'un premier mode de communication à un deuxième mode de communication.

Dans ces modes de réalisation, le premier terminal peut être configuré pour surveiller un ou plusieurs critères de décision de changement de mode de communication, et sur détermination qu'un critère de décision de changement de mode est rempli, et donc qu'un changement de mode doit être effectué, générer une requête de changement de mode de communication pour transmettre cette requête au terminal ou, en fonction du cas de figure, aux terminaux avec lesquels le premier terminal est en communication.

En fonction du mode de réalisation choisi, différents critères de décision de changement de mode de communication peuvent être utilisés. Par exemple, dans un ou plusieurs modes de réalisation, un critère de qualité d'au moins un lien de communication utilisé pour la communication en cours peut être utilisé pour la prise de décision de changement de mode de communication, que celle-ci soit effectué au niveau d'un terminal ou au niveau de l'infrastructure de réseau de communication utilisée pour la communication.

Dans un ou plusieurs modes de réalisation, une décision de changement de mode de communication peut être prise sur la base d'un critère de latence de bout en bout de la communication. Par exemple, dans un réseau radio à extension de couverture radio (par exemple utilisant la technologie LTE-M), la latence de bout en bout, c'est-à-dire entre le premier terminal et le/les autres terminaux avec lesquels le premier terminal est en communication, peut être mesurée régulièrement, par exemple périodiquement, de manière à détecter un changement de latence (dégradation ou amélioration) au-delà d'un seuil défini par un critère de latence de bout en bout. Le dépassement du seuil, qui n'est pas forcément identique pour une dégradation (augmentation) et pour une amélioration (diminution) de la latence, pourra, dans un ou plusieurs modes de réalisation, déclencher la détermination que le critère de changement de mode de communication est rempli ; ce qui conduira à une requête de changement de mode selon l'un des modes de réalisation du procédé proposé. L'utilisation d'un critère de latence de bout en bout est particulièrement bien adaptée à la situation dans laquelle un terminal A est en communication avec un terminal B, le terminal A disposant d'une couverture radio de bonne qualité, mais le terminal B étant dans une situation contraignante du point de vue de la qualité de couverture radio dont il dispose. Dans ce cas, il peut être avantageux de considérer la latence de bout en bout, c'est-à-dire entre le terminal A et le terminal B, éventuellement combiné au débit disponible, pour la prise de décision de changement de mode de communication selon le procédé proposé.

Dans un ou plusieurs modes de réalisation, une décision de changement de mode de communication peut être prise sur la base d'un critère de débit de la communication. Par exemple, dans un réseau radio à extension de couverture radio (par exemple utilisant la technologie LTE-M), le débit du lien radio entre le premier terminal et une infrastructure de réseau d'accès radio du système de télécommunications peut être mesuré régulièrement, par exemple périodiquement, de manière à détecter un changement de débit (dégradation ou amélioration) au-delà d'un seuil défini par un critère de débit. Le dépassement du seuil, qui n'est pas forcément identique pour une dégradation (diminution) et pour une amélioration (augmentation) du débit pourra, dans un ou plusieurs modes de réalisation, déclencher la détermination que le critère de changement de mode de communication est rempli, ce qui conduira à une requête de changement de mode selon l'un des modes de réalisation du procédé proposé.

Dans un ou plusieurs modes de réalisation, une décision de changement de mode de communication peut être prise sur la base d'un critère utilisant un paramètre de communication radio pour la communication utilisant au moins un lien de communication radio. Par exemple, dans un réseau radio à extension de couverture radio (par exemple utilisant la technologie LTE-M), un ou plusieurs niveaux de qualité de signal (par exemple un indicateur de qualité de signal de référence reçu RSRQ, de l'anglais « Reference Signal Received Quality »), un ou plusieurs niveaux de puissance du signal radio reçu (par exemple un indicateur de puissance de signal de référence reçu RSRP (de l'anglais , « Reference Signal Received Power ») par le premier terminal et/ou par une infrastructure de réseau d'accès radio du système de télécommunications à laquelle le premier terminal est connecté, peuvent être mesurés régulièrement, par exemple périodiquement, de manière à détecter un changement de niveau de puissance du signal reçu (dégradation ou amélioration) au-delà d'un seuil défini par un critère de niveau de puissance du signal reçu. Le dépassement du seuil, qui n'est pas forcément identique pour une dégradation (diminution) et pour une amélioration (augmentation) du niveau de puissance du signal reçu pourra, dans un ou plusieurs modes de réalisation, déclencher la détermination que le critère de changement de mode de communication est rempli, ce qui conduira à une requête de changement de mode selon l'un des modes de réalisation du procédé proposé. Par exemple, dans un réseau radio à extension de couverture radio (par exemple utilisant la technologie LTE-M), un paramètre relatif au nombre de répétitions dans la transmission d'un signal radio entre le premier terminal et une infrastructure de réseau d'accès radio du système de télécommunications à laquelle le premier terminal est connecté, peut être mesuré régulièrement, par exemple périodiquement, de manière à détecter un changement de valeur du paramètre (dégradation ou amélioration, par exemple du fait d'un nombre de répétitions croissant ou décroissant) au-delà d'un seuil défini par un critère relatif au nombre de répétitions. Le dépassement du seuil, qui n'est pas forcément identique pour une dégradation (augmentation du nombre de répétitions) et pour une amélioration (diminution du nombre de répétitions) du paramètre pourra, dans un ou plusieurs modes de réalisation, déclencher la détermination que le critère de changement de mode de communication est rempli, ce qui conduira à une requête de changement de mode selon l'un des modes de réalisation du procédé proposé.

La surveillance d'un critère utilisé pour la prise de décision de changement de mode de communication peut comprendre l'obtention de mesures correspondant au critère surveillé. Par exemple, la surveillance d'un critère de qualité d'un lien de communication peut comprendre l'obtention de mesures de qualité du lien de communication.

En fonction de mode de réalisation, la surveillance d'un critère pourra être mise en oeuvre de manière autonome par un terminal configuré pour la mise en oeuvre du procédé proposé, ou par l'infrastructure de réseau à laquelle les terminaux participant à la communication sont connectés et configurée pour la mise en oeuvre du procédé proposé.

Par exemple, la surveillance d'un critère peut être effectuée dans un ou plusieurs modes de réalisation de manière autonome par une application de communication exécutée sur un terminal. L'application de communication peut être configurée pour effectuer ou obtenir des données (de mesure ou d'estimation de valeur de paramètre) pour la mise en oeuvre du critère de décision de changement de mode de communication. Par exemple, l'application de communication peut être configurée pour effectuer des mesures de débit et/ou de latence relatives à une communication en cours, et pour utiliser ces données pour la mise en oeuvre d'un critère de décision de changement de mode de communication.

Dans un ou plusieurs modes de réalisation, l'application de communication peut être configurée pour obtenir des données pour la mise en oeuvre du critère de décision de changement de mode de communication, par exemple des données générées et/ou obtenues par les couches basses exécutées par le terminal (couche physique, couche de contrôle d'accès au media (de l'anglais MAC, pour « Medium Access Control »), par exemple par le biais d'une interface applicative de type API (de l'anglais « Application Programming Interface ». Ainsi, dans un ou plusieurs modes de réalisation, un terminal configuré pour la mise en oeuvre du procédé proposé peut être muni d'une interface de programmation applicative, ou de tout autre type d'interface configurée pour transmettre à une application de communication des données pour la mise en oeuvre d'un critère de décision de changement de mode de communication.

Dans un ou plusieurs modes de réalisation, un terminal peut aussi être configuré pour recevoir de l'infrastructure de réseau à laquelle il est connecté des données (par exemple des résultats de mesures et/ou des estimations de valeurs) relatives à des paramètres, par exemple de la couche radio (par exemple un nombre de répétitions nécessaires pour la transmission de données depuis et/ou vers le terminal), qu'il surveille pour la prise de décision de changement de mode de communication selon le procédé proposé. Dans un ou plusieurs modes de réalisation, un terminal peut être configuré pour, sur réception de ces données relatives à des paramètres, exploiter ces données et/ou les transmettre à un ou plusieurs terminaux avec lesquels il est en communication.

Dans un ou plusieurs modes de réalisation, la mise en oeuvre du procédé proposé peut s'appuyer plus fortement sur les données que l'infrastructure de réseau à laquelle l'un au moins des terminaux est connecté pour la communication peut générer et/ou obtenir. Par exemple, l'infrastructure de réseau peut être configurée pour transmettre régulièrement, par exemple périodiquement, des données relatives à la latence bout en bout au terminal, ou des données de performance et/ou de qualité permettant au terminal de déterminer une estimation de la latence bout en bout aux fins d'une prise de décision de changement de mode de communication selon le procédé proposé.

Dans un ou plusieurs modes de réalisation, l'utilisateur du terminal en cours de communication peut être notifié d'un changement de mode de communication par le biais d'une interface utilisateur, telle qu'une interface homme machine configurée sur le terminal pour la mise en oeuvre du procédé proposé.

Dans un ou plusieurs modes de réalisation, le procédé proposé peut ainsi comprendre la génération, sur une interface homme-machine d'un premier terminal, d'un message de signalisation du changement de mode de communication pour passer d'un premier mode de communication à un deuxième mode de communication. En fonction du mode de réalisation, le message de signalisation pourra être un message d'information de l'utilisateur relativement à un changement de mode de communication, ou un message d'interrogation de l'utilisateur préalablement à un changement de mode de communication. Dans ce dernier cas, un applicatif de communication configuré pour la mise en oeuvre du procédé proposé pourra être configuré pour obtenir une commande de l'utilisateur autorisant ou non un changement de mode de communication. La prise en compte d'une commande de l'utilisateur est particulièrement avantageuse pour améliorer l'expérience utilisateur, notamment dans le cas de figure où le changement de mode de communication conduit à utiliser un mode de communication dégradé par rapport au mode de communication en cours. L'utilisateur peut en effet refuser le passage dans un mode de communication jugé trop dégradé, et préférer une possible interruption de la communication.

Dans un ou plusieurs modes de réalisation, le basculement de la communication en cours vers un mode de communication textuel depuis un mode de communication non textuel (par exemple un mode de communication vocal) peut déclencher l'affichage sur une interface graphique d'un ou plusieurs des terminaux engagés dans la communication en cours d'un contenu textuel sur la base d'une transcription d'un contenu vocal de la communication en mode non textuel préalablement au basculement. La fourniture de contenu textuel correspondant par exemple à un contenu vocal de la communication avant un changement de mode de communication conduisant à quitter un mode de communication vocal permet d'améliorer l'expérience utilisateur, en accompagnant la transition d'un mode de communication vocal vers un mode de communication textuel.

La figure 4a est un diagramme illustrant des échanges de message entre deux terminaux selon un ou plusieurs modes de réalisation dans lesquels le changement de mode de communication est piloté par les terminaux.

En référence à la figure 4a, un premier terminal (UE A) en communication avec un deuxième terminal (UE B) selon un premier mode de communication au travers d'un réseau de communication (non représenté sur la figure) détermine la survenance d'un événement déclencheur de changement de mode de communication pour passer du premier mode de communication vers un deuxième mode de communication. Dans un ou plusieurs modes de réalisation, l'événement déclencheur peut être lié à la surveillance de la qualité d'un lien de communication entre le premier terminal et le deuxième terminal par un applicatif exécuté sur le premier terminal (UE A). En fonction du mode de réalisation, l'applicatif peut, pour les besoins de cette surveillance, avoir accès ou non à des mesures de lien radio, le cas échéant, par exemple de type mesure de RSRP/RSRQ liées au plan de contrôle des couches basses). Sur détection de l'événement déclencheur, le premier terminal (UE A) peut transmettre au deuxième terminal (UE B) une requête de changement de mode de communication (« requête vers mode #n ») vers un mode #n, différent du mode de communication courant, et par exemple choisi parmi un ensemble comprenant un mode de communication vocal bidirectionnel (mode #1), un mode de communication vocal unidirectionnel (mode #2, par exemple un mode de communication de type PTT), et un mode de communication texte (mode #3, par exemple un mode de communication de type SMS). Le deuxième terminal (UE B) peut être configuré pour, sur réception de la requête de changement de mode de communication, déterminer s'il supporte le changement de mode vers le deuxième mode de communication et/ou déterminer s'il accepte ou refuse, pour toute autre raison, le passage du premier mode de communication vers le deuxième mode de communication, et répondre au premier terminal (UE A) de manière correspondante (« accord/désaccord mode #n »). Le premier terminal (UE A) peut être configuré pour, sur réception de la réponse du deuxième terminal (UE B) et sur la base de cette réponse, déterminer si le changement de mode est confirmé ou annulé, et répondre au deuxième terminal (UE B) en fonction de cette détermination (« confirmation/annulation mode #n »).

La figure 4b est un diagramme illustrant des échanges de message entre deux terminaux selon un ou plusieurs modes de réalisation dans lesquels le changement de mode de communication est piloté par le réseau.

En référence à la figure 4b, un premier terminal (UE A) est en communication avec un deuxième terminal (UE B) selon un premier mode de communication au travers d'un réseau de communication (Réseau). Un ou plusieurs noeuds du réseau peuvent être configurés pour déterminer la survenance d'un événement déclencheur de changement de mode de communication pour passer du premier mode de communication vers un deuxième mode de communication. Dans un ou plusieurs modes de réalisation, l'évènement déclencheur peut être lié à la surveillance de la qualité d'un lien de communication entre le premier terminal et le deuxième terminal par le réseau. La surveillance de lien de communication effectuée par le réseau peut utiliser des mesures de paramètres (par exemple de type mesure de RSRP/RSRQ liées au plan de contrôle des couches basses) obtenues ou réalisées par le réseau indépendamment de la mise en oeuvre du procédé proposé. Sur détection de l'événement déclencheur, le réseau (Réseau) peut transmettre au premier terminal (UE A) et au deuxième terminal (UE B) une requête de changement de mode de communication (« requête vers mode #n ») vers un mode #n, différent du mode de communication courant, et par exemple choisi parmi un ensemble comprenant un mode de communication vocal bidirectionnel (mode #1), un mode de communication vocal unidirectionnel (mode #2, par exemple un mode de communication de type PTT), et un mode de communication texte (mode #3, par exemple un mode de communication de type SMS).

Chacun des premier (UE A) et deuxième terminal (UE B) peut être configuré pour, sur réception de la requête de changement de mode de communication, déterminer s'il supporte le changement de mode vers le deuxième mode de communication et/ou déterminer s'il accepte ou refuse, pour toute autre raison, le passage du premier mode de communication vers le deuxième mode de communication, et répondre au réseau (Réseau) de manière correspondante (« accord/désaccord mode #n »). Le ou les noeuds du réseau (Réseau) configurés pour la mise en oeuvre du procédé proposé peuvent être configurés pour, sur réception des réponses du premier terminal (UE A) et du deuxième terminal (UE B) et sur la base de ces réponses, déterminer si le changement de mode est confirmé ou annulé, et répondre au premier terminal (UE A) et au deuxième terminal (UE B) en fonction de cette détermination (« confirmation/annulation mode #n »).

Dans un ou plusieurs modes de réalisation, le procédé proposé permet avantageusement de choisir de manière dynamique le mode de communication présentant le meilleur confort tout en restant compatible avec les caractéristiques du lien actuel. Ainsi une communication commencée dans de très bonnes conditions de liaison (par exemple une conversation téléphonique bidirectionnelle avec une haute qualité audio) peut évoluer vers une communication avec une qualité audio progressivement dégradée si la qualité de la liaison se dégrade. Si la qualité de lien continue à se dégrader et passe-en dessous d'un seuil préconfiguré de débit ou de latence qui ne permet plus de maintenir une conversation bidirectionnelle, la communication peut passer de manière transparente et sans initiative des utilisateurs dans un mode de communication semi duplex (comme par exemple un mode de communication de type PTT). Dans un ou plusieurs modes de réalisation, cette transition peut être annoncée par un signal sonore aux participants. Afin de maintenir une certaine interactivité malgré l'absence de voix bidirectionnelle, la conversation en mode semi duplex peut être enrichie par un échange d'information (symboles, texte.) de la part des utilisateurs n'ayant pas la parole vers le locuteur actif.

Un système de demande de la parole par le même canal peut également être mis en place dans un ou plusieurs modes de réalisation pour permettre d'identifier le prochain locuteur une fois la parole libérée. Là encore, un signal audio peut indiquer au locuteur actif que quelqu'un a demandé la parole. En outre, de la même manière que dans le cas d'une communication bidirectionnelle, il peut être prévu que le taux de compression des codeurs audio s'adapte à la capacité du lien.

Si la qualité du lien continue à se dégrader encore et ne permet plus de maintenir une conversion audio en semi duplex, la conversation pourra évoluer de manière transparente et sans initiative de la part des participants en mode conversation par échange de messages texte.

Dans un ou plusieurs modes de réalisation, un critère de qualité de la connexion pourra être utilisé pour déclencher les transitions entre les différents modes. Par exemple, un critère composite peut être utilisé pour prendre en compte l'ensemble des facteurs pouvant affecter le confort de la conversation, tel que le débit disponible, la latence moyenne, la gigue de la latence, etc. Dans un ou plusieurs modes de réalisation, le critère peut lui-même être dynamique afin de ne prendre en compte que les point les plus pertinents suivant la transition à opérer. Ainsi, par exemple, la latence est un critère déterminant dans le maintien d'une conversation bidirectionnelle ou son évolution vers une conversation semi-duplex. Par contre, cette même latence n'a plus la même pertinence lorsqu'il s'agit de faire une transition d'une conversation audio semi-duplex vers une conversation en mode texte. Dans un ou plusieurs modes de réalisation, un mécanisme d'hystérésis peut être utilisé afin d'éviter un risque d'instabilité lors des transitions entre modes de communication.

Dans un ou plusieurs modes de réalisation, la mise en oeuvre du procédé proposé peut utiliser une remontée par le terminal vers le réseau de mesures de puissance moyenne (P) et d'interférence reçue (1). Par exemple, chaque mode de communication peut être associé à un seuil minimum de P et de P/I. Par exemple, le passage du mode conversationnel vers le mode half duplex pourra être décidé dans les situations où P et P/I passent en dessous de seuils préconfigurés Pmin et P/Imin, respectivement.

La mise en oeuvre du procédé proposé est particulièrement avantageuse dans le contexte de l'utilisation de la technologie LTE-M dans la mesure où cette dernière permet le support de conservations téléphoniques normales lorsque les terminaux sont en zone de couverture LTE classique. Lorsqu'un terminal LTE-M s'éloigne de cette zone, la couverture réseau est maintenue, par le biais de l'extension de couverture. L'extension de couverture utilisant des répétitions d'émission peut conduire à une baisse progressive du débit disponible et une augmentation de la latence, jusqu'à un point où la communication téléphonique bidirectionnelle ne peut être maintenue. Le procédé proposé permet d'en éviter la coupure et de prolonger la conversation sous un mode plus adapté à la qualité de la liaison disponible. Il est noté que dans ce contexte, l'indication du nombre de répétitions utilisés peut directement fournir un indicateur de qualité du lien représentatif à la fois du débit et de la latence.

La figure 5a illustre un exemple d'architecture d'un terminal pour la mise en oeuvre du procédé proposé.

En référence à la figure 5a, le dispositif 100 comprend un contrôleur 101, couplé de manière opérationnelle à une interface de communication 102 et à une mémoire 103, qui pilote un module de gestion de communications 104.

L'interface de communication 102 comprend une ou plusieurs unités de communication, chacune configurée pour émettre et/ou recevoir des données selon un ou plusieurs protocoles de communication de données et/ou de voix (par voie filaire ou sans-fil), par exemple de type WLAN, Ethernet, UMTS, LTE, LTE-A, ou LTE-M.

Le contrôleur 101 est configuré pour piloter le module de gestion de communications 104 et l'interface de communication 102 pour la mise en oeuvre d'un ou de plusieurs modes de réalisation du procédé proposé.

Le module de gestion de communications 104 est configuré pour la mise en oeuvre du procédé proposé par un terminal. En particulier, le module de gestion de communications 104 peut être configuré pour remplir les fonctions et accomplir les actes décrits dans la présente description pour la mise en oeuvre du procédé proposé par un terminal. Dans un ou plusieurs modes de réalisation, le module de gestion de communications 104 est configuré pour obtenir une requête de changement de mode de communication pour une communication en cours, pour passer d'un premier mode de communication vers un deuxième mode de communication, et pour effectuer un basculement de la communication du premier mode de communication vers le deuxième mode de communication. En fonction de mode de réalisation du mode de gestion de communications 104, la requête de changement de mode de communication peut être générée par le module 104, ou peut être reçue d'un autre terminal, ou du réseau auquel le terminal est connecté.

Le dispositif 100 peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et éventuellement d'autres éléments matériels associés comme une interface de réseau et un lecteur de support pour lire un support de stockage amovible et écrire sur un tel support (non représentés sur la figure). Le support de stockage amovible peut être, par exemple, une clé USB, une mémoire SSD, etc. En fonction du mode de réalisation, la mémoire, l'unité de stockage de données et/ou le support de stockage amovible contiennent des instructions qui, lorsqu'elles sont exécutées par le contrôleur 101, amènent ce contrôleur 101 à effectuer ou contrôler les parties module de gestion de communications 104 et interface de communication 102 des exemples de mise en oeuvre du procédé proposé décrits dans la présente description. Le contrôleur 101 peut être un composant implémentant un processeur ou une unité de calcul pour la gestion de communications selon le procédé proposé et le contrôle des unités 102 et 104 du dispositif 100.

Le dispositif 100 peut être mis en oeuvre sous forme logicielle, sous forme matérielle, comme un circuit intégré spécifique application (ASIC), ou sous forme d'une combinaison d'éléments matériels et logiciels, comme par exemple un programme logiciel destiné à être chargé et exécuté sur un composant de type FPGA (Field Programmable Gate Array). De même, le module de gestion de communications 104 peut être mis en oeuvre sous forme logicielle (par exemple par le biais de fonctionnalités configurées dans une application de communication exécutée sur le terminal), sous forme matérielle, comme un ASIC, ou sous forme d'une combinaison d'éléments matériels et logiciels, comme par exemple un programme logiciel destiné à être chargé et exécuté sur un composant de type FPGA.

La figure 5b illustre un exemple d'architecture d'un noeud de réseau de communications pour la mise en oeuvre du procédé proposé.

En référence à la figure 5b, le dispositif 200 comprend un contrôleur 201, couplé de manière opérationnelle à une interface de communication 202 et à une mémoire 203, qui pilote un module de gestion de communications entre terminaux 204.

L'interface de communication 202 comprend une ou plusieurs unités de communication, chacune configurée pour émettre et/ou recevoir des données selon un ou plusieurs protocoles de communication de données et/ou de voix (par voie filaire ou sans-fil), par exemple de type WLAN, Ethernet, UMTS, LTE, LTE-M et LTE-A.

Le contrôleur 201 est configuré pour piloter le module de service de relais 204 et l'interface de communication 202 pour la mise en oeuvre d'un ou de plusieurs modes de réalisation du procédé proposé.

Le module de gestion de communications entre terminaux 204 est configuré pour la mise en oeuvre du procédé proposé par un noeud d'une infrastructure de réseau utilisable pour la gestion de communication entre des terminaux du réseau. En particulier, le module de gestion de communications entre terminaux 204 peut être configuré pour remplir les fonctions et accomplir les actes décrits dans la présente description pour la mise en oeuvre du procédé proposé par un noeud de réseau de communication.

Le dispositif 200 peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, une mémoire SSD, etc. En fonction du mode de réalisation, la mémoire, l'unité de stockage de données ou le support de stockage amovible contient des instructions qui, lorsqu'elles sont exécutées par le contrôleur 201, amènent ce contrôleur 201 à effectuer ou contrôler les parties module de gestion de communications entre terminaux 204 et interface de communication 202 des exemples de mise en oeuvre du procédé proposé décrits dans la présente description. Le contrôleur 201 peut être un composant implémentant un processeur ou une unité de calcul pour la gestion de communications selon le procédé proposé et le contrôle des unités 202 et 204 du dispositif 200.

Le dispositif 200 peut être mis en oeuvre sous forme logicielle, sous forme matérielle, comme un circuit intégré spécifique application (ASIC), ou sous forme d'une combinaison d'éléments matériels et logiciels, comme par exemple un programme logiciel destiné à être chargé et exécuté sur un composant de type FPGA (Field Programmable Gate Array). De même, le module de service de relais 204 peut être mis en oeuvre sous forme logicielle, sous forme matérielle, comme un ASIC, ou sous forme d'une combinaison d'éléments matériels et logiciels, comme par exemple un programme logiciel destiné à être chargé et exécuté sur un composant de type FPGA.

En fonction du mode de réalisation choisi, certains actes, actions, événements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou événements sont effectués ou se produisent concurremment et non pas successivement.

Bien que décrits à travers un certain nombre d'exemples de réalisation détaillés, le procédé de pilotage proposé et le dispositif pour la mise en oeuvre d'un mode de réalisation du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en oeuvre ensemble, ou séparément, ou bien substitués les uns aux autres, et l'ensemble des différentes combinaisons et sous-combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

## Revendications

1. Procédé de gestion d'une communication entre terminaux (UE A, UE B) dans un système de télécommunications, comprenant, la communication étant établie selon un premier mode de communication :
obtenir (20), par un premier terminal (UE A) participant à la communication, une requête de changement de mode de communication pour passer du premier mode de communication à un deuxième mode de communication ;
effectuer (21) un basculement de la communication du premier mode de communication au deuxième mode de communication ;
dans lequel le premier mode de communication et le deuxième mode de communication sont des modes de communication différents dans un ensemble comprenant un mode de communication vocal et un mode de communication textuel, le mode de communication vocal étant unidirectionnel ou bidirectionnel.

2. Procédé selon la revendication 1, dans lequel le système de télécommunications comprend une infrastructure de réseau d'accès radio, et dans lequel le premier terminal (UE A) est un terminal radio et la communication utilise un lien de communication radio entre le premier terminal (UE A) et l'infrastructure de réseau d'accès radio du système de télécommunications.

3. Procédé selon la revendication 2, dans lequel l'infrastructure de réseau d'accès radio est une infrastructure de réseau avec extension de couverture radio, et dans lequel le premier terminal (UE A) est situé dans une zone d'extension de couverture radio de l'infrastructure de réseau d'accès radio du système de télécommunications.

4. Procédé selon l'une quelconque des revendications précédentes, dans lequel l'obtention de la requête comprend, au premier terminal (UE A) :
recevoir la requête de changement de mode de communication depuis une infrastructure de réseau d'accès du système de télécommunications.

5. Procédé selon l'une quelconque des revendications 1 à 3, dans lequel l'obtention de la requête comprend, au premier terminal (UE A) :
recevoir la requête de changement de mode de communication depuis un deuxième terminal (UE B) participant à la communication.

6. Procédé selon l'une quelconque des revendications 1 à 3, dans lequel l'obtention de la requête comprend, au premier terminal (UE A) :
générer la requête de changement de mode de communication pour passer du premier mode de communication au deuxième mode de communication.

7. Procédé selon l'une quelconque des revendications 4 et 6, comprenant en outre, au premier terminal (UE A) :
émettre, à destination d'un deuxième terminal (UE B) participant à la communication, une requête de changement de mode de communication pour passer du premier mode de communication au deuxième mode de communication.

8. Procédé selon l'une quelconque des revendications 6 et 7, dans lequel la communication entre le premier terminal (UE A) et un deuxième terminal (UE B) utilise un lien de communication, le procédé comprenant en outre, au premier terminal (UE A) :
obtenir des mesures de qualité du lien de communication ;
générer la requête de changement de mode de communication sur la base des mesures de qualité du lien de communication.

9. Procédé selon la revendication 8, dans lequel obtenir des mesures de qualité du lien de communication comprend recevoir les mesures ou générer les mesures.

10. Procédé selon l'une quelconque des revendications 8 et 9, dans lequel les mesures de qualité du lien de communication sont relatives à un critère de qualité du lien de communication, le critère de qualité comprenant un critère de latence de bout en bout de la communication, un critère de débit du lien de communication, et/ou un critère utilisant un paramètre de communication radio.

11. Procédé selon la revendication 10, dans lequel le critère utilisant un paramètre de communication radio est relatif à une puissance de signal radio reçue par le premier terminal (UE A), et/ou à un nombre de répétitions dans la transmission de signal radio.

12. Procédé selon l'une quelconque des revendications précédentes, comprenant en outre :
générer sur une interface homme-machine du premier terminal (UE A) un message de signalisation du changement de mode de communication pour passer du premier mode de communication à un deuxième mode de communication.

13. Procédé selon la revendication 11, comprenant en outre :
recevoir une entrée utilisateur relative au changement de mode de communication pour passer du premier mode de communication à un deuxième mode de communication.

14. Procédé selon l'une quelconque des revendications précédentes, comprenant en outre :
sur basculement de la communication vers le mode de communication textuel depuis un mode de communication vocal, afficher sur une interface graphique du premier terminal (UE A) un contenu textuel sur la base d'une transcription d'un contenu vocal de la communication en mode audio avant basculement vers le mode de communication textuel.

15. Procédé de gestion d'une communication entre terminaux dans un système de télécommunications comprenant une infrastructure de réseau, le procédé comprenant, à un noeud de l'infrastructure de réseau d'accès, la communication étant en cours selon un premier mode de communication :
déterminer une variation de la qualité d'un lien de communication utilisé par un premier terminal (UE A) participant à la communication et connecté à l'infrastructure de réseau ;
sur la base de la détermination de variation de qualité du lien de communication, transmettre au premier terminal (UE A) une requête de changement de mode de communication pour passer du premier mode de communication à un deuxième mode de communication ;
dans lequel le premier mode de communication et le deuxième mode de communication sont des modes de communication différents dans un ensemble comprenant un mode de communication vocal et un mode de communication textuel, le mode de communication vocal étant unidirectionnel ou bidirectionnel.

16. Equipement terminal comprenant un processeur et une interface de communication couplée de manière opérationnelle au processeur, configuré pour la mise en oeuvre d'un procédé selon l'une quelconque des revendications 1 à 14.

17. Noeud de réseau de communication de données comprenant un processeur et une interface de communication couplée de manière opérationnelle au processeur, le noeud de réseau étant configuré pour la mise en oeuvre d'un procédé selon la revendication 15.

18. Programme d'ordinateur, chargeable dans une mémoire associée à un processeur, et comprenant des portions de code pour la mise en oeuvre d'un procédé selon l'une quelconque des revendications 1 à 15 lors de l'exécution dudit programme par le processeur.

19. Ensemble de données représentant, par exemple par voie de compression ou d'encodage, un programme d'ordinateur selon la revendication 18.

20. Support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à mettre en oeuvre le procédé de l'une quelconque des revendications 1 à 15.

## Patentansprüche

1. Verfahren zur Verwaltung einer Kommunikation zwischen Endgeräten (UE A, UE B) in einem Telekommunikationssystem, umfassend, wenn die Kommunikation gemäß einem ersten Kommunikationsmodus hergestellt ist:
Erhalten (20), durch ein an der Kommunikation beteiligtes erstes Endgerät (UE A), einer Anforderung zum Wechsel des Kommunikationsmodus, um vom ersten Kommunikationsmodus zu einem zweiten Kommunikationsmodus überzugehen;
Durchführen (21) einer Umschaltung der Kommunikation vom ersten Kommunikationsmodus zum zweiten Kommunikationsmodus;
wobei der erste Kommunikationsmodus und der zweite Kommunikationsmodus unterschiedliche Kommunikationsmodi in einer Menge sind, die einen sprachlichen Kommunikationsmodus und einen textuellen Kommunikationsmodus umfasst, wobei der sprachliche Kommunikationsmodus unidirektional oder bidirektional ist.

2. Verfahren nach Anspruch 1, wobei das Telekommunikationssystem eine Funkzugangsnetz-Infrastruktur umfasst und wobei das erste Endgerät (UE A) ein Funkendgerät ist und die Kommunikation eine Funkkommunikationsverbindung zwischen dem ersten Endgerät (UE A) und der Funkzugangsnetz-Infrastruktur des Telekommunikationssystems verwendet.

3. Verfahren nach Anspruch 2, wobei die Funkzugangsnetz-Infrastruktur eine Netzinfrastruktur mit Funkreichweitenerhöhung ist und wobei sich das erste Endgerät (UE A) in einem Bereich der Funkreichweitenerhöhung der Funkzugangsnetz-Infrastruktur des Telekommunikationssystems befindet.

4. Verfahren nach einem der vorhergehenden Ansprüche, wobei das Erhalten der Anforderung umfasst, am ersten Endgerät (UE A):
Empfangen der Anforderung zum Wechsel des Kommunikationsmodus von einer Zugangsnetz-Infrastruktur des Telekommunikationssystems.

5. Verfahren nach einem der Ansprüche 1 bis 3, wobei das Erhalten der Anforderung umfasst, am ersten Endgerät (UE A):
Empfangen der Anforderung zum Wechsel des Kommunikationsmodus von einem an der Kommunikation beteiligten zweiten Endgerät (UE B).

6. Verfahren nach einem der Ansprüche 1 bis 3, wobei das Erhalten der Anforderung umfasst, am ersten Endgerät (UE A) :
Erzeugen der Anforderung zum Wechsel des Kommunikationsmodus, um vom ersten Kommunikationsmodus zum zweiten Kommunikationsmodus überzugehen.

7. Verfahren nach einem der Ansprüche 4 und 6, welches außerdem umfasst, am ersten Endgerät (UE A):
Senden, an ein an der Kommunikation beteiligtes zweites Endgerät (UE B), einer Anforderung zum Wechsel des Kommunikationsmodus, um vom ersten Kommunikationsmodus zum zweiten Kommunikationsmodus überzugehen.

8. Verfahren nach einem der Ansprüche 6 und 7, wobei die Kommunikation zwischen dem ersten Endgerät (UE A) und einem zweiten Endgerät (UE B) eine Kommunikationsverbindung verwendet, wobei das Verfahren außerdem umfasst, am ersten Endgerät (UE A):
Erhalten von Qualitätsmessungen der Kommunikationsverbindung;
Erzeugen der Anforderung zum Wechsel des Kommunikationsmodus auf der Basis der Qualitätsmessungen der Kommunikationsverbindung.

9. Verfahren nach Anspruch 8, wobei das Erhalten von Qualitätsmessungen der Kommunikationsverbindung das Empfangen der Messungen oder Erzeugen der Messungen umfasst.

10. Verfahren nach einem der Ansprüche 8 und 9, wobei sich die Qualitätsmessungen der Kommunikationsverbindung auf ein Qualitätskriterium der Kommunikationsverbindung beziehen, wobei das Qualitätskriterium ein Kriterium der Ende-zu-Ende-Latenz der Kommunikation, ein Kriterium der Übertragungsgeschwindigkeit der Kommunikationsverbindung und/oder ein Kriterium, das einen Funkkommunikationsparameter verwendet, umfasst.

11. Verfahren nach Anspruch 10, wobei sich das Kriterium, das einen Funkkommunikationsparameter verwendet, auf eine von dem ersten Endgerät (UE A) empfangene Funksignalleistung und/oder auf eine Anzahl von Wiederholungen in der Funksignalübertragung bezieht.

12. Verfahren nach einem der vorhergehenden Ansprüche, welches außerdem umfasst:
Erzeugen, auf einer Mensch-Maschine-Schnittstelle des ersten Endgerätes (UE A), einer Signalisierungsnachricht des Wechsels des Kommunikationsmodus, um vom ersten Kommunikationsmodus zu einem zweiten Kommunikationsmodus überzugehen.

13. Verfahren nach Anspruch 11, welches außerdem umfasst:
Empfangen einer Benutzereingabe, die sich auf den Wechsel des Kommunikationsmodus bezieht, um vom ersten Kommunikationsmodus zu einem zweiten Kommunikationsmodus überzugehen.

14. Verfahren nach einem der vorhergehenden Ansprüche, welches außerdem umfasst:
beim Umschalten der Kommunikation von einem sprachlichen Kommunikationsmodus und zum textuellen Kommunikationsmodus, Anzeigen, auf einer grafischen Schnittstelle des ersten Endgerätes (UE A), eines textuellen Inhalts auf der Basis einer Transkription eines sprachlichen Inhalts der Kommunikation im Audiomodus vor dem Umschalten zum textuellen Kommunikationsmodus.

15. Verfahren zur Verwaltung einer Kommunikation zwischen Endgeräten in einem Telekommunikationssystem, das eine Netzinfrastruktur umfasst, wobei das Verfahren umfasst, an einem Knoten der Zugangsnetz-Infrastruktur, wenn die Kommunikation gemäß einem ersten Kommunikationsmodus stattfindet:
Bestimmen einer Änderung der Qualität einer Kommunikationsverbindung, die von einem ersten Endgerät (UE A) verwendet wird, das an der Kommunikation beteiligt und mit der Netzinfrastruktur verbunden ist;
auf der Basis der Bestimmung der Qualitätsänderung der Kommunikationsverbindung, Übertragen einer Anforderung zum Wechsel des Kommunikationsmodus an das erste Endgerät (UE A), um vom ersten Kommunikationsmodus zu einem zweiten Kommunikationsmodus überzugehen;
wobei der erste Kommunikationsmodus und der zweite Kommunikationsmodus unterschiedliche Kommunikationsmodi in einer Menge sind, die einen sprachlichen Kommunikationsmodus und einen textuellen Kommunikationsmodus umfasst, wobei der sprachliche Kommunikationsmodus unidirektional oder bidirektional ist.

16. Endeinrichtung, welche einen Prozessor und eine Kommunikationsschnittstelle, die funktionswirksam mit dem Prozessor verbunden ist, umfasst und für die Durchführung eines Verfahrens nach einem der Ansprüche 1 bis 14 ausgelegt ist.

17. Netzknoten eines Datenkommunikationsnetzes, welcher einen Prozessor und eine Kommunikationsschnittstelle, die funktionswirksam mit dem Prozessor verbunden ist, umfasst, wobei der Netzknoten für die Durchführung eines Verfahrens nach Anspruch 15 ausgelegt ist.

18. Computerprogramm, das in einen Speicher, der mit einem Prozessor assoziiert ist, geladen werden kann und Codeabschnitte für die Durchführung eines Verfahrens nach einem der Ansprüche 1 bis 15 bei der Ausführung dieses Programms durch den Prozessor umfasst.

19. Datensatz, der, beispielsweise durch Komprimierung oder Codierung, ein Computerprogramm nach Anspruch 18 darstellt.

20. Nichttransitorisches Speichermedium für ein computerausführbares Programm, beinhaltend einen Datensatz, der ein oder mehrere Programme darstellt, wobei das eine oder die mehreren Programme Anweisungen beinhalten, um bei Ausführung des einen oder der mehreren Programme durch einen Computer, der eine Verarbeitungseinheit beinhaltet, die mit Speichermitteln und einem Eingangs-/Ausgangsschnittstellenmodul betriebsfähig gekoppelt ist, den Computer dazu zu veranlassen, das Verfahren nach einem beliebigen der Ansprüche 1 bis 15 umzusetzen.

## Claims

1. Method for managing a communication between terminals (UE A, UE B) in a telecommunications system, comprising, with the communication being established in a first communication mode:
a first terminal (UE A) participating in the communication obtaining (20) a communication mode change request to switch from the first communication mode to a second communication mode;
carrying out (21) a changeover of the communication from the first communication mode to the second communication mode;
wherein the first communication mode and the second communication mode are different communication modes in a set comprising a voice communication mode and a text communication mode, the voice communication mode being unidirectional or bidirectional.

2. Method according to Claim 1, wherein the telecommunications system comprises a radio access network infrastructure, and wherein the first terminal (UE A) is a radio terminal and the communication uses a radio communication link between the first terminal (UE A) and the radio access network infrastructure of the telecommunications system.

3. Method according to Claim 2, wherein the radio access network infrastructure is a network infrastructure with extended radio coverage, and wherein the first terminal (UE A) is located in an extended radio coverage area of the radio access network infrastructure of the telecommunications system.

4. Method according to any one of the preceding claims, wherein obtaining the request comprises, at the first terminal (UE A):
receiving the communication mode change request from an access network infrastructure of the telecommunications system.

5. Method according to any one of Claims 1 to 3, wherein obtaining the request comprises, at the first terminal (UE A) :
receiving the communication mode change request from a second terminal (UE B) participating in the communication.

6. Method according to any one of Claims 1 to 3, wherein obtaining the request comprises, at the first terminal (UE A) :
generating the communication mode change request to switch from the first communication mode to the second communication mode.

7. Method according to any one of Claims 4 and 6, furthermore comprising, at the first terminal (UE A):
transmitting, to a second terminal (UE B) participating in the communication, a communication mode change request to switch from the first communication mode to the second communication mode.

8. Method according to either one of Claims 6 and 7, wherein the communication between the first terminal (UE A) and a second terminal (UE B) uses a communication link, the method furthermore comprising, at the first terminal (UE A):
obtaining quality measurements in relation to the communication link;
generating the communication mode change request on the basis of the quality measurements in relation to the communication link.

9. Method according to Claim 8, wherein obtaining quality measurements in relation to the communication link comprises receiving the measurements or generating the measurements.

10. Method according to either one of Claims 8 and 9, wherein the quality measurements in relation to the communication link relate to a criterion regarding the quality of the communication link, the quality criterion comprising a criterion regarding end-to-end latency of the communication, a criterion regarding the bit rate of the communication link, and/or a criterion using a radio communication parameter.

11. Method according to Claim 10, wherein the criterion using a radio communication parameter relates to a radio signal strength received by the first terminal (UE A), and/or to a number of repetitions in the radio signal transmission.

12. Method according to any one of the preceding claims, furthermore comprising:
generating, on a human-machine interface of the first terminal (UE A), a communication mode change signalling message to switch from the first communication mode to a second communication mode.

13. Method according to Claim 11, furthermore comprising:
receiving a user input relating to the communication mode change to switch from the first communication mode to a second communication mode.

14. Method according to any one of the preceding claims, furthermore comprising:
upon changeover of the communication to the text communication mode from a voice communication mode, displaying, on a graphical interface of the first terminal (UE A), text content on the basis of a transcription of voice content of the communication in audio mode before changing over to the text communication mode.

15. Method for managing a communication between terminals in a telecommunications system comprising a network infrastructure, the method comprising, at a node of the access network infrastructure, the communication being in progress in a first communication mode:
determining a variation in the quality of a communication link used by a first terminal (UE A) participating in the communication and connected to the network infrastructure;
on the basis of the determination of the variation in quality of the communication link, transmitting, to the first terminal (UE A), a communication mode change request to switch from the first communication mode to a second communication mode;
wherein the first communication mode and the second communication mode are different communication modes in a set comprising a voice communication mode and a text communication mode, the voice communication mode being unidirectional or bidirectional.

16. Terminal equipment comprising a processor and a communication interface operationally coupled to the processor, configured to implement a method according to any one of Claims 1 to 14.

17. Data communication network node comprising a processor and a communication interface operationally coupled to the processor, the network node being configured to implement a method according to Claim 15.

18. Computer program able to be loaded into a memory associated with a processor and comprising portions of code for implementing a method according to any one of Claims 1 to 15 when said program is executed by the processor.

19. Dataset representing, for example through compression or encoding, a computer program according to Claim 18.

20. Medium for the non-transient storage of a computer-executable program, comprising a dataset representing one or more programs, said one or more programs comprising instructions for, when said one or more programs are executed by a computer comprising a processing unit operationally coupled to memory means and to an input/output interface module, causing the computer to implement the method according to any one of Claims 1 to 15.
